# EUROPEAN PATENT SPECIFICATION

(11) **EP 0 190 863 B1**
(45) Date of publication and mention of the grant of the patent: **23.03.1994**
(21) Application number: 86300556.7
(22) Date of filing: 28.01.1986
(51) Int. Cl.: B25B 5/14, B25B 5/08, F16L 47/02

(54) **Clamping device for pipe fittings**
Spannvorrichtung für Rohrformstücke
Dispositif de serrage pour raccords de tuyaux

(30) Priority: 31.01.1985 GB 8502440
(43) Date of publication of application: 13.08.1986
(73) Proprietor: FUSION GROUP PLC, Chesterfield, Derbyshire S41 9PZ (GB)
(72) Inventor: Bridgstock, Eric, Hope Derbyshire (GB)
(74) Representative: Lerwill, John

(56) References cited:
- DE-A- 2 153 923
- DE-A- 2 514 827
- DE-C- 77 056
- FR-A- 2 139 868
- FR-A- 2 301 361
- FR-A- 2 439 930
- US-A- 2 987 294
- US-A- 3 471 176

## Description

This invention is concerned with apparatus for use in making welded joints in thermoplastic pipe, and in particular relates to a clamping device for clamping a so-called saddle fitting against a pipe during welding of the fitting to the pipe.

Electro-fusion saddle fittings are used for connecting branch pipes to a main pipe made of thermoplastic material, such as polyethylene. A saddle fitting generally consists of a part-cylindrical body having a concave surface corresponding to the shape of the pipe to which it is to be attached, and an integral boss projecting outwardly from the body for connection of a branch pipe, the fitting being moulded from a material which is compatible with and preferably the same as that of the main pipe so that the fitting can be welded directly to the main pipe. An electrical resistance heating element is included in the fitting and electric current is supplied to this element to heat and fuse the material of the fitting to that of the pipe.

In US-A-3471176 there is described a saddle fitting which is not welded to the pipe and instead is held clamped against the pipe by a substantially semicylindrical bottom piece which engages a hook at one side of the fitting and at the other side is provided with a bolt for tightening the parts together. With this fitting the bottom clamping piece is an essential part of the fitting which must remain fixed to the pipe.

When making pipe joints with an electro-fusion saddle fitting, it is essential that the fitting be clamped securely against the main pipe during the welding process otherwise the joint is likely to be defective. In FR-A-2301361 there is disclosed an assembly in which a saddle fitting is held on a pipe by a semi-cylindrical shell located around the pipe opposite the fitting, and two clips which engage and hold together flanges provided on the adjacent edges of the saddle fitting and semi-cylindrical shell.

The aim of the present invention is to provide a device for holding a saddle fitting in place on a pipe which can be easily released for re-use and which is convenient to use in the field.

According to the present invention there is provided a clamp device for clamping a saddle fitting to a thermoplastic pipe during welding of the fitting to the pipe for making a branch connection to the pipe, the device comprising stirrup means arranged to engage the pipe at a position opposite the fitting and having abutment means for engaging the fitting adjacent the side edges thereof, characterised in that the stirrup means comprises two separate stirrup members for engaging the pipe at respective positions spaced apart along the pipe, each stirrup member having attached securely to the first end an abutment means and being firmly attached at the second end to a common clamping mechanism, the clamping mechanism includes a clamping member for abutment with the fitting, and means selectively operable to move the clamping member in a direction towards the adjacent, second ends of the stirrup members to clamp the fitting firmly against the pipe, or to allow the clamping member to move in the opposite direction for releasing the device from the pipe and fitting after welding, whereby the unit consisting of the stirrup means, the abutment means and the clamping mechanism is configured to be slidable along the pipe in relation to the fitting to allow the abutment means and the clamping member to slidingly engage in an overlapping manner the averting surfaces of the respective side edges of the fitting, and the clamping mechanism is detachably connected to the stirrup members whereby to permit the device to be disassembled for ease of transportation and the clamping mechanism to be used with different stirrup members to suit pipes of various sizes.

The device of the invention is removed by disengaging the clamping mechanism on completion of the welded joint, allowing the device to be used time and time again. It is known in the prior art to use a clamping system which remains fixed to the pipe when the joint is completed, which is uneconomic e.g. due to the wastage of the material of the clamping member. Because the clamping mechanism according to the invention is detachable from the stirrup means, the disadvantage of requiring a separate tool for use with each size of pipe is substantially alleviated. In a preferred embodiment of the invention the stirrup members are cut from metal extrusions and are held at a fixed distance apart longitudinally of the pipe when assembled with the clamping mechanism. With this construction a tool kit including the clamping mechanism and a number of pairs of stirrup members will provide all that is needed to assemble clamping devices suitable for a range of pipe sizes, and such a kit may be accommodated in an easily portable carrying case. The weight of and space taken up by such a kit are very small in comparison with an equivalent range of separate clamping tools which would be needed for use with the same number of pipe sizes.

A full understanding of the invention will be had from the following detailed description, reference being made to the accompanying drawings in which:-
Figure 1 is an end view of a clamping device according to the invention shown in position ready to clamp a saddle fitting onto a pipe;
Figure 2 is a side view of the clamping device;
Figure 3 is a plan view of the clamping device;
Figure 4 is a section taken along the line IV-IV of Figure 3; and
Figure 5 is a side view of an alternative stirrup member.

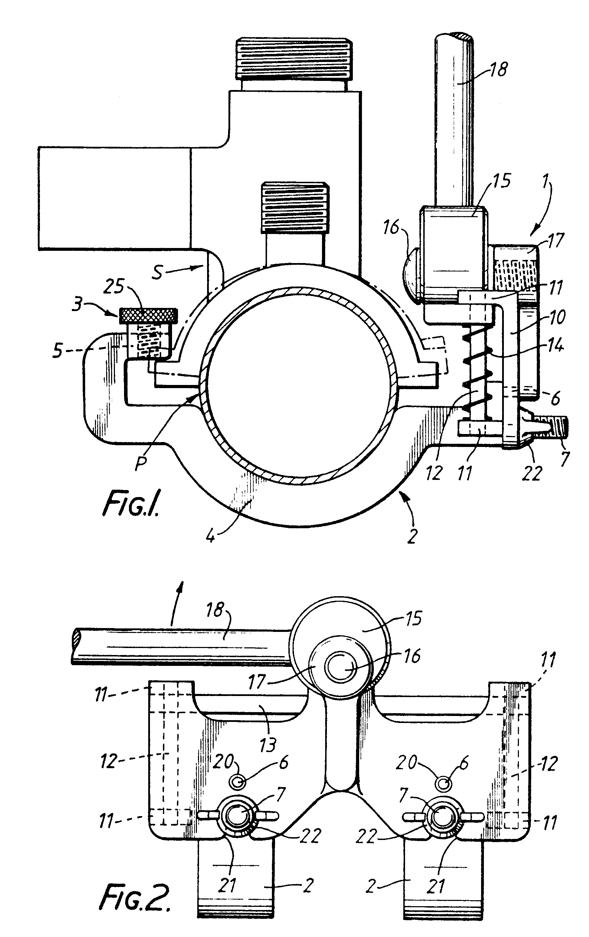

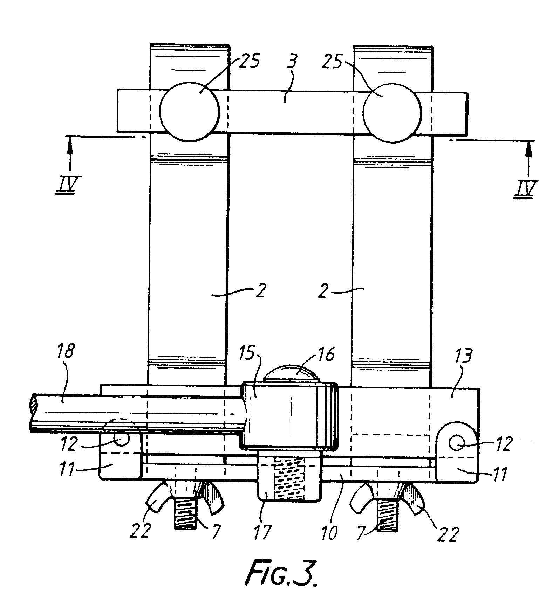

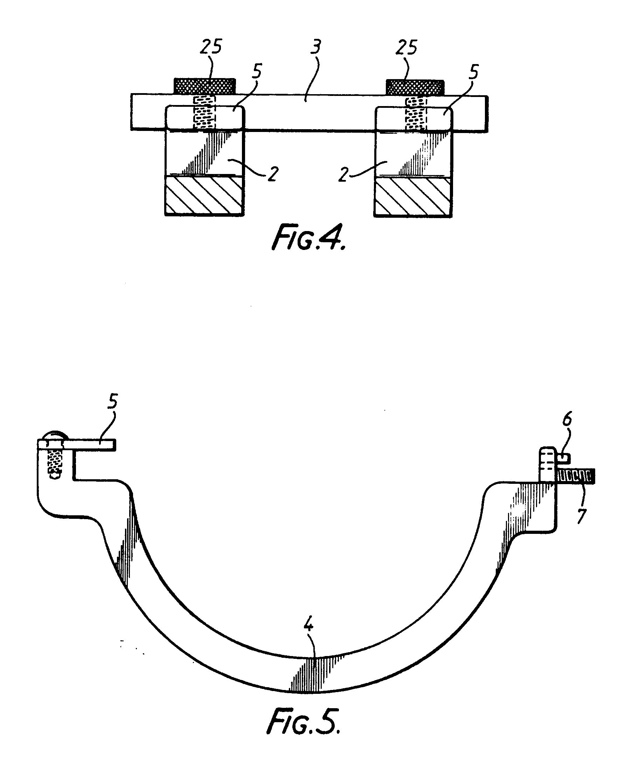

The embodiment of the invention illustrated in Figures 1-4 is assembled from four unit parts, namely a clamping mechanism 1, two stirrup members 2 which are of identical construction, and a bridging or spacer bar 3. Each stirrup member has a curved medial portion 4 shaped to conform to the external surface of a pipe P with which the clamping device is to be used. At one end the stirrup member is shaped to provide an in-turned tongue 5 for abutting a lateral flange projecting from the side edge of a saddle fitting S which is to be welded to the pipe P, the tongue engaging the flange at the side remote from the curved portion 4 of the stirrup member, as may be seen clearly in Figure 1. At its other end the stirrup member is fitted with a location pin 6 and a threaded stud 7 for attaching the member to the clamping mechanism as explained below. The stirrup member 2 may be conveniently made by cutting from a metal extrusion.

The clamping mechanism 1 comprises a support plate 10 having at either end pairs of spaced apart lugs 11 supporting respective guide pins 12. The pins 12 are parallel and mount a clamp plate 13 which is freely slidable along the pins. Light coil springs 14 surround the respective pins 12 and urge the clamp plate to a retracted position as shown in the drawings. For displacing the clamp plate along the pins an eccentrically mounted cylindrical roller cam 15 is provided. The cam 15 is journalled on a pin 16 which is threadedly engaged with an internally screw threaded boss 17 fastened to the support plate 10. Fixed to the cam and projecting radially from it is an operating handle or lever 18, by means of which the cam can be rotated through approximately 180°, in the clockwise direction as viewed in Figure 2, to move the clamp plate 13 from the retracted position in which it is depicted to an operative clamping position.

The stirrup members 2 are respectively connected to the support plate 10 at spaced apart positions. For mounting each stirrup member the plate 10 is provided with a hole 20 to receive the location pin 6, and an open-ended slot 21 to receive the threaded stud 7. To secure the connection wing nuts 22 are screwed onto the studs 7, these nuts having been omitted in Figure 2 in the interest of clarity. It will be understood that by loosening the wing nuts the stirrup members 2 can be readily detached from the clamping mechanism 1, e.g. to allow other members to be substituted for use with pipes of different diameter.

The spacer bar 3 is provided to hold the ends of the stirrup members remote from the clamping mechanism at the required spacing and also to spread the clamping load along the length of the adjacent flange of the saddle fitting S. The bar is provided with rectangular notches dimensioned to receive the tongues 5, and thumb screws 25 which engage with threaded holes in the tongues to secure the bar to the members 2. Thus, the bar 3 is easily released from the stirrup members when the latter are to be replaced. In some cases it may be possible to dispense with the bar 3.

With the clamping device correctly assembled, as it is shown in the drawings, and with the clamp plate 13 retracted, the curved portions of the stirrup members are brought into contact with the pipe P at the side opposite the saddle fitting S which is also placed against the pipe. The clamping device is then moved relative to the fitting S longitudinally of the pipe to bring the tongues 5 and bar 3 into position adjacent the flange at one side of the fitting and the clamp plate 13 to a position confronting the flange at the other side of the fitting. By manual operation of the handle 18, the cam 15 is rotated to drive the clamp plate 13 into engagement with the flange of the fitting and then press the lateral edges of the fitting into firm clamping engagement with the pipe. The fitting is now secured firmly to tie pipe and may be welded in position by supply of electric power to the heating element. When the weld is completed the clamping device is easily removed by turning the handle 18 to retract the clamp plate 13 and then sliding the device along the pipe until it is clear of the saddle fitting.

As already mentioned above, by releasing the wing nuts 22 and thumb screws 25, the stirrup members 2 can be detached and alternative members adapted for use with pipes of different size can be connected to the clamping mechanism and spacer bar in their place. One alternative stirrup member is shown in Figure 5, and apart from being of different size it differs in as much that the tongue 5 is formed separately and then fixed in place by screws.

In addition to the clamping device as described, the invention contemplates a tool kit comprising the clamping mechanism preferably the spacer bar, and a plurality of pairs of stirrup members adapted for use with pipes of different sizes.

## Claims

1. A clamp device for clamping a saddle fitting (S) to a thermoplastic pipe (P) during welding of the fitting to the pipe for making a branch connection to the pipe, the device comprising stirrup means (2) arranged to engage the pipe at a position opposite the fitting and having abutment means for engaging the fitting adjacent the side edges thereof, characterised in that the stirrup means comprises two separate stirrup members (2) for engaging the pipe at respective positions spaced apart along the pipe, each stirrup member having attached securely to the first end an abutment means (5) and being firmly attached at the second end to a common clamping mechanism (1), the clamping mechanism includes a clamping member (13) for abutment with the fitting, and means (15, 18) selectively operable to move the clamping member (13) in a direction towards the adjacent, second ends of the stirrup members to clamp the fitting firmly against the pipe, or to allow the clamping member to move in the opposite direction for releasing the device from the pipe and fitting after welding, whereby the unit consisting of the stirrup means (2), the abutment means (5) and the clamping mechanism (1) is configured to be slidable along the pipe in relation to the fitting to allow the abutment means (5) and the clamping member (13) to slidingly engage in an overlapping manner the averting surfaces of the respective side edges of the fitting, and the clamping mechanism is detachably connected to the stirrup members whereby to permit the device to be disassembled for ease of transportation and the clamping mechanism to be used with different stirrup members to suit pipes of various sizes.

2. A clamp device according to claim 1, wherein the stirrup members comprise sections cut from a metal extrusion.

3. A clamp device according to claim 1 or 2, wherein the ends of the stirrup members remote from the clamping mechanism are interconnected by a spacer (3), the spacer being detachable from the stirrup members.

4. A clamp device according to claim 3, wherein the spacer (3) is arranged to engage the fitting for spreading the clamping load along the fitting.

5. A clamp device according to any one of claims 1 to 4, wherein the stirrup members (2) are attached to the clamping mechanism (1) by respective releasable connections.

6. A clamp device according to claim 5, wherein the releasable connections comprise screw threaded securing elements (7, 22).

7. A clamp device according to any one of the preceding claims, wherein the clamping mechanism comprises a support member (10), guide means (12) guiding the clamping member (13) for movement relative to the support member, and cam means (15) for displacing the clamping member to exert a clamping force on the fitting.

8. A clamp device according to claim 7, wherein the guide means comprises parallel pins (12) fixed on the support member and the clamping member comprises a plate (13) having holes through which the pins pass.

9. A clamp device according to claim 7 or 8, wherein the cam means comprises a rotary cam (15) mounted for rotation on the support member (10) and acting against the clamping member (13), and an operating handle (18) fast with the cam for rotating the cam.

10. A tool kit comprising a clamp device as claimed in claim 1, characterised in that it comprises at least two pairs of stirrup members shaped for engagement with pipes of different diameters, the pairs of stirrup members being selectively attachable to the clamping mechanism for assembling a clamp device adapted for use with a respective size of pipe.

## Patentansprüche

1. Spannvorrichtung zum Spannen eines Rohrschellenformstücks (S) an einem thermoplastischen Rohr während des Verschweißens des Formstücks mit dem Rohr zum Herstellen einer Verzweigungsverbindung mit dem Rohr, wobei die Vorrichtung Bügeteile (2) umfaßt, die so angeordnet sind, daß sie an dem Rohr an einer Stelle gegenüberliegend dem Formstück eingreifen und die Widerlagerteile zum Eingreifen in das Formstück angrenzend an dessen Seitenkanten besitzen, dadurch gekennzeichnet, daß das Rohrschellenformstück zwei getrennte Bügelteile (2) zum Eingriff mit dem Rohr an entsprechenden Stellen aufweist, die entlang des Rohrs voneinander beabstandet sind, wobei jedes Bügelteil fest an dem ersten Ende eines Widerlagerteils (5) befestigt ist und fest an dem zweiten Ende mit einem üblichen Spannmechanismus (1) befestigt ist, wobei der Spannmechanismus ein Spannteil (13) zum Anlegen an das Formstück aufweist, und Einrichtungen (15, 18) aufweist, die selektiv betätigbar sind, um das Spannteil (13) in einer Richtung angrenzend an die zweiten Enden der Bügelteile zu bewegen, um das Formstück fest gegen das Rohr zu spannen oder um zu ermöglichen, daß sich das Spannstück in die entgegengesetzte Richtung zur Freigabe der Vorrichtung von dem Rohr und dem Formstück und nach dem Schweißen bewegt, wobei die Einheit aus Bügelteilen (2) besteht, wobei die Widerlagerteile und der Spannmechanismus so aufgebaut sind, daß sie entlang des Rohrs in Bezug auf das Formstück gleitend verschiebbar sind, um zu ermöglichen, daß die Widerlager und das Spannteil (13) gleitend in einer überlappenden Weise der abgewandten Oberflächen der entsprechenden Seitenkanten des Formstücks in Eingriff bringbar sind und wobei der Spannmechanismus abnehmbar mit den Bügelteilen verbunden ist, wodurch ermöglicht wird, daß die Vorrichtung für einen leichten Transport auseinanderbaubar ist und der Spannmechanismus mit unterschiedlichen Bügelteilen verwendbar ist, um ihn Rohren unterschiedlicher Größen anzupassen.

2. Spannvorrichtung nach Anspruch 1, wobei die Bügelteile Teile umfassen, die von einem Metallextrusionsteil abgeschnitten sind.

3. Spannvorrichtung nach Anspruch 1 oder 2, wobei die Enden der Bügelteile, die von dem Spannmechanismus entfernt angeordnet sind, über ein Abstandsteil 3 miteinander verbunden sind, wobei das Abstandsteil von den Bügelteilen abnehmbar ist.

4. Spannvorrichtung nach Anspruch 3, wobei das Abstandsteil 3 so angeordnet ist, um in das Formstück zum Verteilen der Klemmspannung entlang des Formstücks einzugreifen.

5. Spannvorrichtung nach einem der Ansprüche 1 bis 4, wobei die Bügelteile 2 an dem Spannmechanismus 1 durch entsprechende lösbare Verbindungen befestigt sind.

6. Spannvorrichtung nach Anspruch 5, wobei die lösbaren Verbindungen mit Schraubengewinden versehene Sicherungselemente (7, 22) umfassen.

7. Spannvorrichtung nach einem der vorhergehenden Ansprüche, wobei der Spannmechanismus ein Trägerteil (10), eine Führungseinrichtung (12), die das Spannteil (13) für eine Bewegung relativ zu dem Trägerteil führen, und Nockeneinrichtungen (15) zur Verschiebung des Spannteils, um eine Spannkraft auf das Formstück auszuüben, umfaßt.

8. Spannvorrichtung nach Anspruch 7, wobei die Führungseinrichtung parallele Stifte (12) aufweist, die an dem Trägerteil befestigt sind, und das Spannteil eine Platte (13) aufweist, die Öffnungen besitzt, durch die die Stifte hindurchführen.

9. Spannvorrichtung nach Anspruch 7 oder 8, wobei die Nockeneinrichtung einen Drehnocken (15), der für eine Drehung an dem Trägerteil (10) befestigt ist und gegen das Spannteil (13) einwirkt, und eine Betätigungshandhabe (18) umfaßt, die mit dem Nocken zur Drehung des Nockens befestigt ist.

10. Werkzeugsatz, der eine Spannvorrichtung gemäß Anspruch 1 aufweist, dadurch gekennzeichnet, daß er mindestens zwei Paare von Bügelteilen aufweist, die für einen Eingriff mit Rohren unterschiedlicher Durchmesser geformt sind, wobei die Paare der Bügelteile wahlweise mit dem Spannmechanismus zum Zusammenbau einer Spannvorrichtung befestigbar sind, der für die Verwendung im Zusammenhang mit einer entsprechenden Rohrgröße geeignet ist.

## Revendications

1. Dispositif de serrage pour serrer un raccord chevauchant (S) sur un tuyau thermoplastique (P) au cours de la soudure du raccord sur le tuyau pour réaliser une connexion de branchement sur le tuyau, le dispositif comportant des moyens (2) formant étriers, disposés pour venir en prise avec le tuyau en une position opposée au raccord et présentant des moyens de butée pour venir en prise avec le raccord près de ses bords latéraux, dispositif caractérisé par le fait que les moyens formant étriers comportent deux éléments distincts (2), formant étriers, pour venir en prise avec le tuyau en des positions respectives espacées l'une de l'autre le long du tuyau, chaque élément formant étrier présentant, attaché de façon sûre à sa première extrémité, un moyen de butée (5) et, à sa seconde extrémité, étant fermement attaché à un mécanisme de serrage commun (1), le mécanisme de serrage comprenant un élément de serrage (13) pour venir en butée avec le raccord, et des moyens (15,18) pouvant opérer sélectivement pour déplacer l'élément de serrage (13) en direction des secondes extrémités, adjacentes, des éléments formant étriers, pour serrer fermement le raccord contre le tuyau, ou bien pour permettre à l'élément de serrage de se déplacer dans la direction opposée pour séparer le dispositif d'avec le tuyau et le raccord après soudage, ce par quoi l'ensemble constitué des moyens formant étriers (2), des moyens de butée (5) et du mécanisme de serrage (1) est configuré pour pouvoir coulisser le long du tuyau par rapport au raccord pour permettre aux moyens de butée (5) et à l'élément de serrage (13) de, en coulissant, venir en prise, en les recouvrant, avec les surfaces non vues des bords latéraux respectifs du raccord; et le mécanisme de serrage est connecté de façon amovible aux éléments formant étriers, permettant ainsi de démonter le dispositif pour en faciliter le transport et d'utiliser le mécanisme de serrage avec différents éléments formant étriers pour s'adapter à des tuyaux de différentes dimensions.

2. Dispositif de serrage selon la revendication 1, dans lequel les éléments formant étriers sont constitués de sections découpées à partir d'une pièce métallique obtenue par extrusion.

3. Dispositif de serrage selon la revendication 1 ou 2, dans lequel les extrémités des éléments formant étriers éloignées du mécanisme de serrage sont interconnectées par un écarteur (3), cet écarteur pouvant être détaché d'avec les éléments formant étriers.

4. Dispositif de serrage selon la revendication 3, dans lequel l'écarteur (3) est conçu pour venir en prise avec le raccord pour répartir la charge de serrage le long du raccord.

5. Dispositif de serrage selon l'une quelconque des revendications 1 à 4, dans lequel les éléments formant étriers (2) sont attachés au mécanisme de serrage (1) par des connexions respectives, déconnectables.

6. Dispositif de serrage selon la revendication 5, dans lequel les connexions déconnectables comportent des éléments de fixation (7,22) vissés.

7. Dispositif de serrage selon l'une quelconque des revendications précédentes dans lequel le mécanisme de serrage comporte un élément support (10), des moyens de guidage (12) guidant l'élément de serrage (13) pour son mouvement par rapport à l'élément support, et un moyen (15) formant came pour déplacer l'élément de serrage pour qu'il exerce sur le raccord une force de serrage.

8. Dispositif de serrage selon la revendication 7, dans lequel les moyens de guidage comportent des broches parallèles (12) fixées sur l'élément support et dans lequel l'élément de serrage comporte une plaque (13) présentant des trous par lesquels passent les broches.

9. Dispositif de serrage selon la revendication 7 ou 8, dans lequel le moyen formant came comporte une came tournante (15) montée pour tourner sur l'élément support (10) et agissant contre l'élément de serrage (13), ainsi qu'une poignée de manoeuvre (18) fixée à la came pour faire tourner la came.

10. Outillage comportant un dispositif de serrage selon la revendication 1, caractérisé en ce qu'il comporte au moins deux paires d'éléments formant étriers de forme permettant leur prise avec des tuyaux de différents diamètres, les paires d'éléments formant étriers pouvant être sélectivement attachés au mécanisme de serrage pour assembler un dispositif de serrage adapté à l'emploi avec une dimension respective de tuyau.
